# EUROPEAN PATENT SPECIFICATION

(11) **EP 0 250 977 B1**
(45) Date of publication and mention of the grant of the patent: **31.03.1993**
(21) Application number: 87108484.4
(22) Date of filing: 12.06.1987
(51) Int. Cl.: C08L 75/08, C08G 18/08, C08L 75/04

(54) **Polyurethanes reinforced with rigid rod micro fillers and process for making the same**
Mit harten, stabförmigen Mikro-Füllstoffen verstärkte Polyurethane sowie Verfahren zu deren Herstellung
Polyuréthanes renforcés par des microcharges rigides en forme de barre et leur procédé de préparation

(30) Priority: 25.06.1986 US 878451
(43) Date of publication of application: 07.01.1988
(73) Proprietor: THE DOW CHEMICAL COMPANY, Midland Michigan 48640-1967 (US)
(72) Inventor: Turner, Robert Burton, Lake Jackson State of Texas 77566 (US)
(74) Representative: Huber, Bernhard, Dipl.-Chem.

(56) References cited:
- GB-A- 1 453 258
- US-A- 3 884 989

## Description

This invention relates to polyurethane polymers containing dispersed reinforcing agents and a process for their preparation

It is well known to reinforce polyurethane polymers with macroscopic fillers such as glass, polyamide, polyester, graphite or similar fibers; particulate fillers such as, for example, calcium carbonate and barium sulfate, and other fillers such as sand, and milled or flaked glass. Although these fillers are known to improve the properties of the polyurethane, they have several drawbacks. One is the amount of such fillers which are needed to obtain good reinforcement. Typically, up to 60 percent or more of the filled polymer comprises the filler material. It would be highly desirable to obtain good reinforcement at lower levels of filler. Another problem is that many of these filler materials do not strongly adhere to the polyurethane matrix. Accordingly, the reinforcement is not as great as would be expected. Another problem is that although certain properties such as stiffness and tensile strength are improved by the use of these fillers, these improvements are usually accompanied by a substantial decrease in other properties, notably impact strength, fatigue and elongation.

It is also known to reinforce a polyurethane polymer by using a polyol containing colloidally dispersed polymer particles. These so-called "polymer polyols" generally contain as the dispersed polymer a styrene/acrylonitrile copolymer, a polyurea polymer or a polyurethane-urea polymer. The dispersed polymers are usually prepared in situ by polymerizing the appropriate monomers within the polyol. The reinforced polyurethane is prepared by reacting the dispersion with a polyisocyanate. The use of polymer polyols has not been found to significantly increase properties such as tensile strength or flexural modulus. The major use for these products has been in flexible polyurethane foams, where the dispersed particles increase the load bearing properties of the foam, and perform a cell opening function.

US-A-3,884,989 discloses a polymer consisting essentially of a first solid phase consisting essentially of a synthetic organic fiber-forming matrix polymer selected from the group consisting of polyamides, polyesters, spandex polymers, and polyacrylics, and a second solid phase distributed throughout said matrix polymer and present in a reinforcing amount, consisting essentially of acicular particles of poly(1,4-benzamide) having a length of less than about 10 microns and having an aspect ratio greater than about 2.

GB 1,453,258 discloses a process for the production of a polyurethane foam, which comprises reacting a dispersion of polyurea and/or a polyhydrazo dicarbonamide in a hydroxyl group containing polyether with at least one polyisocyanate in the presence of a blowing agent. The dispersion is prepared by reacting at least one organic polyisocyanate with at least one polyamine containing primary and/or secondary amino groups and/or at least one hydrazine or at least one hydrazide in at least one polyether containing at least one hydroxyl group.

It would be desirable to provide a reinforced polyurethane in which good reinforcement is obtained even at relatively low filler levels and in which desirable improvements in physical properties are achieved without major losses in other properties.

In one aspect, this invention is a polyurethane polymer which is the reaction product of a polyisocyanate and an active hydrogen-containing composition which at least contains one compound having hydroxyl groups having dispersed therein elongate particles of a high-melting rigid polymer having a a melting point in excess of 100°C, characterized in that
(a) said high-melting rigid polymer comprises a polymer of an aromatic diamine and an aromatic diisocyanate and the elongate particles having an average length of less than 10 micrometers and an aspect ratio greater than 4 are present in an amount sufficient to increase the tensile strength and/or elongation of the polyurethane polymer relative to a like polyurethane polymer which is prepared in the absence of said elongate particles, and
(b) wherein said amount of rigid polymer is either 6 to 20 weight per cent (based on weight of the polyurethane) when the rigid polymer has a molecular weight less than 3000, or 1 to less than 10 weight per cent (based on weight of the polyurethane) when the rigid polymer has a molecular weight greater than 3000.

In a preferred embodiment thereof the rigid polymer has an aspect ratio of at least 6.4. In another preferred embodiment the aromatic diamine comprises methylene dianiline and said aromatic diisocyanate comprises diphenylmethanediisocyanate. In yet another preferred embodiment the polyurethane is a polyurethane polymer which is noncellular, microcellular, or cellular.

In another aspect, this invention refers to an active hydrogen-containing composition comprising at least one active hydrogen-containing compound which contains at least one compound having hydroxyl groups and having dispersed therein elongate particles of a high-melting rigid polymer having a melting point in excess of 100°C present in an amount which provides reinforcement to a polyurethane polymer prepared by reacting a polyisocyanate and the active hydrogen-containing composition, characterized in that
(a) said high-melting rigid polymer comprises a polymer of an aromatic diamine and an aromatic diisocyanate and the elongate particles having an average length of less than 10 micrometers and an aspect ratio greater than 4 are present in an amount sufficient to increase the tensile strength and/or elongation of the polyurethane polymer relative to a like polyurethane polymer which is prepared in the absence of said elongate particles, and
(b) wherein said amount of rigid polymer is either 6 to 20 weight per cent (based on weight of the polyurethane) when the rigid polymer has a molecular weight less than 3000, or 1 to less than 10 weight per cent (based on weight of the polyurethane) when the rigid polymer has a molecular weight greater than 3000.

In a preferred embodiment this composition contains a rigid polymer that has an aspect ratio of at least 6.4.

Applicants have found that by using as a filler material microscopically dispersed, elongate particles of a rigid polymer, very substantial improvements in physical properties, particularly tensile properties can be achieved at surprisingly low loadings.

The filler material employed in this invention is an elongate particle of a rigid polymer. Said particle is characterized by having an aspect ratio (ratio of length to diameter) of greater than 4, preferably at least 6.4. Said particle is also advantageously small in size, preferably being colloidally dispersed in the polyurethane. Said particle has an average length of less than 10 micrometers, especially less than 2 micrometers, and an average diameter such that it has an aspect ratio as stated above.

In addition to the required elongate shape, the polymer must be of a composition such that it is relatively rigid. By relatively rigid, it is meant that the rigid polymer exhibits a flexural modulus, in bulk, which is substantially (at least 1.5 times) greater than that of the polyurethane matrix in which it is dispersed. Preferably, the rigid polymer is one which in bulk exhibits a flexural modulus of greater than 100,000 psi (0.69 GPa), more preferably greater than 300,000 psi (2.07 GPa), most preferably greater than 500,000 psi (3.45 GPa). Various substantially linear polymers are known to exhibit the required rigidity, and any of those are useful herein. The rigid polymer must also be high melting, i.e. have a melting point in excess of 100°, preferably 150°C. Particularly suitable are polymers containing a plurality of aromatic rings which are joined by relatively inflexible or short linkages such as, for example, a covalent bond or urea, amide, ester, -C=C-, -CH₂-, or -C=N-.

Particularly suitable aromatic diamines are those in which the aromatic ring is parasubstituted such as p-phenylene diamine and 4,4'-methylene dianiline. Particularly suitable aromatic diisocyanates are also parasubstituted, such as p-phenylenediisocyanate and 4,4'-diphenylmethanediisocyanate. An especially preferred rigid polymer is the reaction product of 4,4'-methylene dianiline and 4,4'-diphenylmethanediisocyanate.

The rigid polymer is advantageously formed separately from the formation of the polyurethane polymer. It is anticipated that the rigid polymer will be added to the polyurethane-forming composition prior to the reaction thereof to form the polyurethane. Preferably, the rigid polymer will be dispersed in the active hydrogen-containing composition which is employed to make the polyurethane. In such case, the rigid polymer may be polymerized in situ in the active hydrogen-containing composition, or component thereof, or can be separately formed and added to the active hydrogen-containing composition.

Any polymerization technique which provides polymer particles having the required aspect ratio is suitable. Especially suitable is a solution polymerization technique wherein the monomer(s) or polymer precursor(s) are polymerized in a solvent in which the monomers are soluble, and in which the polymer is soluble at least until it has sufficient molecular weight to achieve the required aspect ratio. Such solvent may be an active hydrogen-containing compound or mixture thereof, or other, non-isocyanate reactive compound or mixture. For the preferred rigid polyurea polymer, a suitable solvent is dimethylformamide, or a solution thereof containing 0.5 to 20%, preferably 1 to 5%, by weight of an inorganic salt such as lithium chloride.

Often, the solubility of the rigid polymer in the solvent is a means of controlling molecular weight. Typically, the polymerization reaction proceeds until the polymer reaches a molecular weight at which it is no longer soluble and precipitates. By the control of temperature, or the use of binary and/or ternary solvent systems, it is often possible to adjust the solvent composition such that the solubility of the polymer therein is such that it precipitates at a desired molecular weight. Other known techniques for controlling polymer molecular weight may similarly be employed in the preparation of the rigid polymer as desired.

The rigid polymer is dispersed into the polyurethane-forming components prior to the reaction thereof to form a polyurethane. When the polymer is formed in situ in an active hydrogen-containing compound, no further dispersion is required. However, when the rigid polymer is formed separately, it is dispersed into the polyurethane-forming components in a manner be which the rigid polymer is substantially uniformly distributed. This is readily accomplished by, for example, mixing a solution of the rigid polymer in a suitable solvent with the active hydrogen-containing composition, or component thereof, which may itself be dissolved in the same or a different solvent. After mixing, the solvent is advantageously removed such as by vacuum stripping. Alternatively, the rigid polymer may be added neat or as a melt to the active hydrogen-containing composition. However, this method is less preferred due to the high melting points exhibited by many of the rigid polymers.

Sufficient of the rigid polymer is employed to measurably increase the tensile strength and/or elongation of the polyurethane polymer. This amount will vary somewhat according to the molecular weight and stiffness of the rigid polymer and the composition of the polyurethane.

The Examples, however, demonstrate that a polymer with improved properties is provided in products wherein the content of the rigid polymer in the polyurethane matrix is in the range of from 6 to 20 percent by weight based on the weight of the polyurethane when the molecular weight of the rigid polymer is less than 3000 and wherein the content of the rigid polymer in the polyurethane matrix is in the range of from 1 to less than 10 percent by weight based on the weight of the polyurethane when the molecular weight of the rigid polymer is more than 3000.

The polyurethane polymer may be cellular, microcellular or noncellular. In particular, this invention is useful for making flexible polyurethane foams, rigid polyurethane foams, microcellular or noncellular polyurethane elastomers, structural polyurethane polymers and polyurethane films and coatings. For the purposes of this invention, the term "polyurethane" refers not only to polymers containing a -NCOO- linkage, but also to other polymers which are based on polyisocyanates such as, for example, polyureas, polyurethane-ureas, polyisocyanurates and polyurethane-modified polyisocyanurates. All of these polymers are characterized as being the reaction product of a polyisocyanate with an active hydrogen-containing composition.

An active hydrogen-containing composition is a composition comprising at least one compound having a plurality of moieties which contain at least one hydrogen atom which is reactive with an isocyanate group. Such moieties include, for example, hydroxyls, primary and secondary amines, carboxylic acids and mercaptans. Compounds having hydroxyl and primary or secondary amine groups are preferred. Suitable such compounds are described, for example, in U.S. Patent No. 4,394,491.

The molecular weight and functionality of the active hydrogen-containing compound depends on the desired physical characteristics of the polyurethane. For elastomeric application, cellular and noncellular, a relatively high equivalent weight, e.g. 400 to 10,000, low functionality (i.e. 2 to 4 active hydrogen-containing groups per molecule) is advantageously used. Often, such elastomers are prepared using a mixture of high equivalent weight compounds and low equivalent weight compounds (crosslinkers or chain extenders). For preparing rigid polyurethane foams, a lower equivalent weight (31 to 400), high functionality (3 to 16 functional) active hydrogen-containing compound or mixture thereof is generally employed. The selection of suitable active hydrogen-containing compounds for preparing a polyurethane of desired characteristics is well known to those skilled in the relevant art.

Particularly suitable active hydrogen-containing compounds for the preparation of flexible polyurethane foams are polyester polyols and polyether polyols which contain 2 to 3 hydroxyl groups per molecule and have an equivalent weight of from 500 to 3000. Especially preferred are polyether polyols which are prepared by sequentially reacting propylene oxide and ethylene oxide to a di- or trihydric initiator to form a primary hydroxyl-terminated polyether of 1000-2000 equivalent weight. Polymer polyols prepared by the in situ polymerization of vinyl monomers, polyurea or polyurethane-urea forming components in said especially preferred polyols are also particularly suitable. In making flexible polyurethane foams, it is common practice to employ a minor amount of a crosslinker such as diethanolamine in the active hydrogen-containing composition.

In making noncellular of microcellular polyurethane elastomers, particularly suitable active hydrogen-containing compounds are polyester polyols and polyether polyols which contain 2 to 3 hydroxyl groups per molecule and have an equivalent weight of from 500 to 3000. Especially preferred are polyether polyols which are prepared by sequentially reacting propylene oxide and ethylene oxide to a di- or trihydric initiator to form a primary hydroxyl-terminated polyether of 1000 to 2000 equivalent weight. Such relatively high equivalent weight polyol is normally used in conjunction with a difunctional, relatively low equivalent weight active hydrogen-containing compound such as are described in U.S. Patent No. 4,269,945. It is often desirable to prereact all or part of either the high equivalent weight compound or the low equivalent weight polyol with a polyisocyanate to form an isocyanate terminated prepolymer or quasi-prepolymer prior to the reaction of the prepolymer with the remainder of the active hydrogen-containing materials. Either conventional casting or reaction injection molding (RIM) techniques may be used to mold the elastomer. Such RIM techniques are described, for example, in Sweeney, F. M., Introduction to Reaction Injection Molding, Technomics, Inc., 1979, and in U.S. Patent Nos. 4,269,945, 4,297,444, 4,530,444, and 4,530,941.

The polyisocyanate employed to make the polyurethane is an agent compound having averages of at least two isocyanate groups per molecule. The isocyanate groups may be bonded to aromatic or aliphatic carbon atoms. Such polyisocyanates are described, for example, in U.S. Patent Nos. 4,065,410, 3,401,180, 3,454,606, 3,152,162, 3,492,330, 3,001,973, 3,594,164 and 3,164,605.

Aromatic polyisocyanates which are particularly useful include, for example, 2,4- and/or 2,6-toluene diisocyanate, diphenylmethanediisocyanate, p-phenylene diisocyanate, polymethylenepolyphenylpolyisocyanates and mixtures thereof. Also useful are polymeric derivatives of diphenylmethanediisocyanate as well as prepolymers or quasi-prepolymers thereof.

Particularly useful aliphatic polyisocyanates include, for example, the hydrogenated derivatives of the foregoing aromatic polyisocyanates, as well as hexamethylene diisocyanate, isophoronediisocyanate, and 1,4-cyclohexane diisocyanate.

In addition, prepolymers and quasi-prepolymers of the foregoing polyisocyanates having an -NCO content of 0.5 to 30% by weight are useful herein.

The polyisocyanate is advantageously present in an amount sufficient to provide in the reaction mixture from 70 to 500, preferably 80 to 150, and more preferably 95 to 120 isocyanate groups per 100 active hydrogen-containing groups. Higher amounts of the polyisocyanate can be used when the formation of an isocyanurate-containing polymer is desired.

In addition to the polyisocyanate and active hydrogen-containing compounds, various other additives which are useful in the preparation of polyurethane polymers may be used herein. Such additives include, for example, catalysts, blowing agents, surfactants, fillers, pigments, antioxidants, and internal mold release agents.

Suitable blowing agents for preparing cellular polyurethanes include, for example, water, low boiling halogenated alkanes such as, for example, methylene chloride, monochlorodifluoromethane, dichlorodifluoromethane, and dichloromonolfuoromethane, the so-called "azo" blowing agents, finely divided solids, as well as other materials which generate a gas under the conditions of the foaming reaction. Water, the halogenated methanes or mixtures thereof are preferred. Water is advantageously employed in an amount of from 0.5 to 10, preferably 1 to 5 parts per 100 parts by weight of the active hydrogen-containing compounds. The halogenated alkanes are advantageously used in amounts of from 5 to 75 parts per 100 parts of active hydrogen containing compounds.

Surfactants are commonly used in the production of cellular polyurethanes, in an amount sufficient to stabilize the forming cells against collapse until the foam is cured. Silicone surfactants are preferred.

Catalysts for preparing polyurethanes include organometallic catalysts and tertiary amines compounds. Of the organometallic catalysts, organotin catalysts are generally preferred. Suitable catalysts are described, for example, in U.S. Patent No. 4,495,081. When using such catalysts, an amount sufficient to increase the rate of the reaction of the polyisocyanate and active hydrogen-containing compounds is employed. Typically, from 0.001 to 0.5 part of an organometallic catalyst is used per 100 parts of active hydrogen-containing compound. Tertiary amine-containing compounds are advantageously used in amounts ranging from 0.1 to 3 parts per 100 parts of active hydrogen containing compounds.

Suitable fillers include, for example, barium sulfate, titanium dioxide, carbon black, iron oxide, calcium carbonate, clays such as kaolin and wollastinite and fibers such as glass, polyester and polyamide fibers. However, due to the reinforcing behavior of the rigid polymer, the need to employ fillers for the purpose of reinforcement is eliminated or significantly reduced.

Suitable internal mold release agents include those described in U.S. Patent No. 4,585,803, as well as combinations of metal carboxylates, particularly zinc carboxylates, with primary or secondary amine-containing compounds, especially amine-terminated polyethers, optionally in the presence of a free acid.

The polyurethane polymer of this invention is useful as cushioning for furniture, bedding and automobile seating; as a coating or sealant; as automobile parts such as, for example, bumpers, door panels, and fascia, as well as for other uses.

The following examples are provided to illustrate the invention. All parts and percentages are by weight unless otherwise indicated.

### Examples 1 to 4 and Comparative Runs A, B and F

### A. Preparation of Rigid Rod Polymer

In a suitable flask were dissolved 19.9 grams of methylene dianiline (MDA) and 25 grams diphenylmethanediisocyanate (MDI) in 750 grams of dimethylformamide (DMF). The solution was placed under a nitrogen atmosphere and stirred for 30 minutes at room temperature. At this time, an off-white polymer precipitated out of the solution. Seven grams of lithium chloride were added to the solution to redissolve the polymer. After sitting for one hour, a few drops of methyl alcohol were added to react with any terminal -NCO groups. Infrared analysis indicated that no measurable isocyanate groups remained. Differential scanning calorimetry (DSC) indicated that the polymer had the average structure

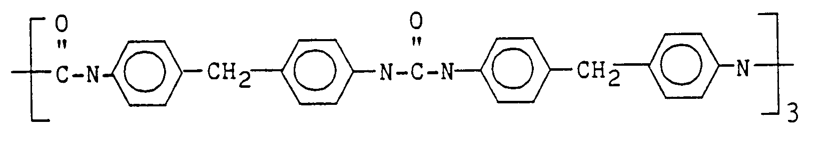

### B. Preparation of Polyurethane Elastomers

Into 675 grams of DMF were placed 25 grams of a 2000 molecular weight difunctional poly(propylene oxide) and 23.6 grams of a 143 equivalent weight "liquid" diphenylmethanediisocyanate. This mixture was heated at 70°C with stirring for two hours under a nitrogen atmosphere. Then, 5 grams of 1,4-butanediol were added and allowed to react for an additional two hours at 70°C.

### C. Reinforced Polymer Film Preparation

A series of polyurethane films (Sample Nos. 1-4 and Comparative Sample No. A, B and F) were prepared by blending portions of the polyurethane elastomer solution and the rigid rod polymer solution to yield polyurethane solutions containing 0, 3, 6, 10, 15, 20 and 30% (by weight of the polyurethane) of rigid rod polymer. Comparative Sample No. A contained none of the rigid rod polymer and comparative Sample No. B contained 3% of the rigid rod polymer. In each instance, a 20 gram portion of the mixture was poured into a polyethylene container and the solvents are evaporated overnight at 50°C. The residue in each instance was a thin film which was easily removed from the container. The films were tested for tensile strength and elongation according to ASTM D-412. The results were as reported in Table 1 following.

**TABLE 1**

| Examples and Comparative Runs | % Rigid Polymer | Tensile Strength, psi (MPa) | Elongation % |
|---|---|---|---|
| A | 0 | 1091 (7.5) | 276 |
| B | 3 | 556 (3.8) | 181 |
| 1 | 6 | 1500 (10.3) | 86 |
| 2 | 10 | 2750 (19.0) | 305 |
| 3 | 15 | 3333 (23.0) | 178 |
| 4 | 20 | 2200 (15.2) | 131 |
| F | 30 | 1167 (8.0) | 55 |

As can be seen from the data in Table 1, the inclusion of 6 to 20 percent of the low molecular weight rigid rod polymer caused substantial increases in tensile strength and, in some cases, an improvement in elongation as well. In Sample No. 3, tensile strength was tripled with only a small loss in elongation, and in Sample No. 2, tensile strength was increased over 250% and elongation was increased. This behavior is contrary to the normal activity of reinforcing agents, which tend to greatly decrease elongation while increasing tensile strength. In Sample B, the inclusion of 3% of the rigid rod polymer decreased both tensile strength and elongation. This is believed due to the relatively low molecular weight of the rigid rod polymer. At this low molecular weight and low level of use, the rigid rod polymer is believed to plasticize rather than reinforce the polymer.

### Examples 5 to 8 and Comparative Runs C, G and H

### A. Preparation of Polyurethane Elastomer

Into 700 grams of DMF were dissolved 25 grams of the polyol described in Part B of Examples 1 to 5, 23.6 grams of a 143 equivalent weight liquid MDI and 5 grams of 1,4-butanediol. This solution was heated at 60°C under a nitrogen pad for 6 hours.

### B. Preparation of Reinforced Polyurethane Films

A series of polyurethane films (Comparative Sample No. C, G and H, and Sample Nos. 5 to 8) were prepared by blending portions of the polyurethane elastomer solution described in Part A of this example with portions of the rigid rod polymer solution described in Examples 1 to 4 to yield polyurethane solutions containing 0, 3, 6, 10, 15, 20 and 30% rigid rod polymer (based on weight of polyurethane). Films were cast by placing small quantities of the solutions in Mylar boats, heating to 50°C overnight and then heating at 100°C for 3 hours. The properties of these films were tested as described in Examples 1 to 4, with results as reported in Table 2.

**TABLE 2**

| Examples and Comparative Runs | % Rigid Polymer | Tensile Strength, psi (MPa) | Elongation % |
|---|---|---|---|
| C | 0 | 1732 (11.9) | 127 |
| G | 3 | 1606 (11.1) | 236 |
| 5 | 6 | 2794 (19.3) | 162 |
| 6 | 10 | 3075 (21.2) | 263 |
| 7 | 15 | 2121 (14.6) | 174 |
| 8 | 20 | 2408 (16.6) | 142 |
| H | 30 | 1041 (7.2) | 73 |

At 6 to 20% levels of rigid rod polymer, very substantial increases in both tensile strength and elongation were seen.

### Examples 9 to 11 and Comparative Run D and I

### A. Preparation of Rigid Rod Polymer

An MDI-MDA copolymer was prepared as described in Examples 1 to 4, except this time the polymerization solvent contained 7 grams lithium chloride. No precipitation occurred after one hour of polymerization at which time a small amount of methyl alcohol was added to terminate the reaction. The resulting solution was significantly more viscous than that described in Examples 1 to 4, indicating that the rigid polymer had a substantially higher molecular weight.

### B. Preparation of Polyurethane Elastomer

A polymer solution was prepared as described in Examples 5 to 8, except that pure MDI was used, and the reaction was conducted for 8 hours.

### C. Preparation of Reinforced Polyurethane Films

Polyurethane films (Sample Nos. 9-11 and Comparative Sample No. D and I) were prepared as described in Examples 1 to 4, except that a Mylar boat was used to cast the films. Films having 1, 3, 6, 10, and 0% rigid rod reinforcement (based on weight of polyurethane) were prepared and were tested as described in Examples 1 to 4. Tensile modulus and the thermal expansion in inches (mm) which resulted from heating the films from 50°C to 150°C were also evaluated. Results were as reported in Table 3.

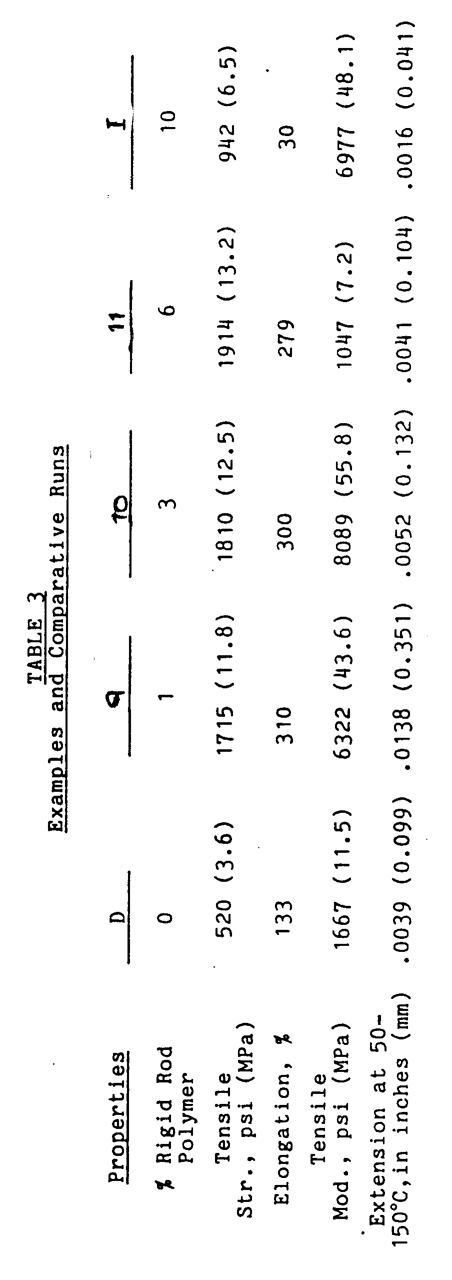

In this example, use of a higher molecular weight rigid rod polymer provided over 300% increase in tensile strength and over 250% increase in elongation at levels as low as 1%. Tensile moduli were also increased in all cases except Sample No. 11. Microscopic analysis of Sample Nos. 9 to 11 showed the presence of microscopically dispersed polyurea particles measuring 1 micrometer in length and 0.1 micrometer in diameter.

### Comparative Run E

A polyurethane solution was prepared as described in Examples 9 to 11. To separate portions of this solution were added sufficient amounts of 1/16" (1.6 mm) milled glass fibers to yield polyurethanes containing 0, 3, 6, 10, 15, and 20% glass (based on weight of polyurethane). Films were made from these solutions as described in Examples 5 to 8 and tested as described in Examples 1 to 4, with results as reported in Table 4.

**TABLE 4**

| % Glass | Tensile Strength, psi (MPa) | Elongation % |
|---|---|---|
| 0 | 1220 (8.4) | 276 |
| 3 | 1403 (9.7) | 233 |
| 6 | 1040 (7.2) | 107 |
| 10 | 1092 (7.5) | 80 |
| 15 | 1303 (9.0) | 33 |
| 20 | 1618 (11.2) | 30 |

These results show the typical effect of using macroscopic inorganic fillers to increase tensile strength. Although tensile strength was in some cases increased, the use of the glass fibers uniformly caused a substantial loss in elongation, which increased with increasing level of filler. This result is in direct contrast with the present invention, in which elongation was substantially maintained, and often greatly increased with the use of rigid rod polymers as reinforcing agents.

## Claims (Claims for the following Contracting State(s): BE, CH, DE, FR, GB, IT, LI, NL, SE)

1. A polyurethane polymer which is the reaction product of a polyisocyanate and an active hydrogen-containing composition which at least contains one compound having hydroxyl groups having dispersed therein elongate particles of a high-melting rigid polymer having a a melting point in excess of 100°C, characterized in that
(a) said high-melting rigid polymer comprises a polymer of an aromatic diamine and an aromatic diisocyanate and the elongate particles having an average length of less than 10 micrometers and an aspect ratio greater than 4 are present in an amount sufficient to increase the tensile strength and/or elongation of the polyurethane polymer relative to a like polyurethane polymer which is prepared in the absence of said elongate particles, and
(b) wherein said amount of rigid polymer is either 6 to 20 weight per cent (based on weight of the polyurethane) when the rigid polymer has a molecular weight less than 3000, or 1 to less than 10 weight per cent (based on weight of the polyurethane) when the rigid polymer has a molecular weight greater than 3000.

2. A polyurethane polymer as claimed in claim 1 wherein said rigid polymer has an aspect ratio of at least 6.4.

3. A polyurethane polymer as claimed in claim 1 or 2 wherein said aromatic diamine comprises methylene dianiline and said aromatic diisocyanate comprises diphenylmethanediisocyanate.

4. A polyurethane polymer as claimed in any one of the preceding claims which is noncellular, microcellular, or cellular.

5. An active hydrogen-containing composition comprising at least one active hydrogen-containing compound which contains at least one compound having hydroxyl groups and having dispersed therein elongate particles of a high-melting rigid polymer having a melting point in excess of 100°C present in an amount which provides reinforcement to a polyurethane polymer prepared by reacting a polyisocyanate and the active hydrogen-containing composition, characterized in that
(a) said high-melting rigid polymer comprises a polymer of an aromatic diamine and an aromatic diisocyanate and the elongate particles having an average length of less than 10 micrometers and an aspect ratio greater than 4 are present in an amount sufficient to increase the tensile strength and/or elongation of the polyurethane polymer relative to a like polyurethane polymer which is prepared in the absence of said elongate particles, and
(b) wherein said amount of rigid polymer is either 6 to 20 weight per cent (based on weight of the polyurethane) when the rigid polymer has a molecular weight less than 3000, or 1 to less than 10 weight per cent (based on weight of the polyurethane) when the rigid polymer has a molecular weight greater than 3000.

6. A composition as claimed in claim 5 wherein said rigid polymer has an aspect ratio of at least 6.4.

7. A process for preparing a polyurethane polymer having dispersed therein elongate particles of a high-melting rigid polymer having a melting point in excess of 100°C by reacting a polyisocyanate and an active hydrogen-containing composition which at least contains one compound having hydroxyl groups, characterized by
(a) dispersing in the active hydrogen-containing composition elongate particles of a high-melting rigid polymer having an average length of less than 10 micrometers and an aspect ratio greater than 4 of an aromatic diamine and an aromatic diisocyanate in an amount sufficient to increase the tensile strength and/or elongation of the polyurethane polymer relative to a like polyurethane polymer which is prepared in the absence of said elongate particles, and
(b) wherein said amount of rigid polymer is either 6 to 20 weight per cent (based on weight of the polyurethane) when the rigid polymer has a molecular weight less than 3000, or 1 to less than 10 weight per cent (based on weight of the polyurethane) when the rigid polymer has a molecular weight greater than 3000.

## Claims (Claims for the following Contracting State(s): AT, ES)

1. A process for preparing a polyurethane polymer having dispersed therein elongate particles of a high-melting rigid polymer having a melting point in excess of 100°C by reacting a polyisocyanate and an active hydrogen-containing composition which at least contains one compound having hydroxyl groups, characterized by
(a) dispersing in the active hydrogen-containing composition elongate particles of a high-melting rigid polymer having an average length of less than 10 micrometers and an aspect ratio greater than 4 of an aromatic diamine and an aromatic diisocyanate in an amount sufficient to increase the tensile strength and/or elongation of the polyurethane polymer relative to a like polyurethane polymer which is prepared in the absence of said elongate particles, and
(b) wherein said amount of rigid polymer is either 6 to 20 weight per cent (based on weight of the polyurethane) when the rigid polymer has a molecular weight less than 3000, or 1 to less than 10 weight per cent (based on weight of the polyurethane) when the rigid polymer has a molecular weight greater than 3000.

2. A process as claimed in claim 1 wherein a rigid polymer is prepared which has an aspect ratio of at least 6.4.

3. A process as claimed in claim 1 or 2 wherein said aromatic diamine comprises methylene dianiline and said aromatic diisocyanate comprises diphenylmethanediisocyanate.

4. A process as claimed in any one of the preceding claims wherein a polyurethane polymer is prepared which is noncellular, microcellular, or cellular.

## Patentansprüche (Patentansprüche für folgende(n) Vertragsstaat(en): BE, CH, DE, FR, GB, IT, LI, NL, SE)

1. Polyurethanpolymer, welches das Reaktionsprodukt eines Polyisocyanats und einer aktiven Wasserstoff enthaltenden Zusammensetzung ist, die mindestens eine Verbindung mit Hydroxylgruppen enthält, worin langgestreckte Teilchen eines hochschmelzenden, starren Polymers mit einem Schmelzpunkt von über 100°C dispergiert sind,
**dadurch gekennzeichnet,** daß
(a) das hochschmelzende, starre Polymer ein Polymer eines aromatischen Diamins und eines aromatischen Diisocyanats umfaßt und die langgestreckten Teilchen, die eine mittlere Länge von weniger als 10 Mikrometer und ein Aspektverhältnis von mehr als 4 aufweisen, in einer ausreichenden Menge vorhanden sind, um die Zugfestigkeit und/oder die Dehnung des Polyurethanpolymers gegenüber einem gleichartigen Polyurethanpolymer zu verbessern, das in Abwesenheit der langgestreckten Teilchen hergestellt wird und
(b) worin die Menge an starrem Polymer entweder 6 bis 20 Gew.-% (auf Basis des Polyurethangewichts) ist, wenn das starre Polymer ein Molekulargewicht von weniger als 3000 aufweist, oder 1 bis weniger als 10 Gew.-% (auf Basis des Polyurethangewichts) ist, wenn das starre Polymer ein Molekulargewicht von mehr als 3000 aufweist.

2. Polyurethanpolymer nach Anspruch 1, worin das starre Polymer ein Aspektverhältnis von mindestens 6,4 aufweist.

3. Polyurethanpolymer nach Anspruch 1 oder 2, worin das aromatische Diamin Methylendianilin umfaßt und das aromatische Diisocyanat Diphenylmethandiisocyanat umfaßt.

4. Polyurethan nach einem der vorhergehenden Ansprüche, das nicht-zellig, mikrozellig oder zellig ist.

5. Aktiven Wasserstoff enthaltende Zusammensetzung, die mindestens eine aktiven Wasserstoff enthaltende Verbindung umfaßt, die mindestens eine Verbindung mit Hydroxylgruppen enthält und worin langgestreckte Teilchen eines hochschmelzenden, starren Polymers mit einem Schmelzpunkt über 100°C in einer Menge dispergiert sind, die eine Verstärkung eines durch Reaktion eines Polyisocyanats und der aktiven Wasserstoff enthaltenden Zusammensetzung hergestellten Polyurethanpolymers bewirkt,
**dadurch gekennzeichnet,** daß,
(a) das hochschmelzende, starre Polymer ein Polymer eines aromatischen Diamins und eines aromatischen Diisocyanats umfaßt und die langgestreckten Teilchen, die eine mittlere Länge von weniger als 10 Mikrometer und ein Aspektverhältnis von mehr als 4 aufweisen, in einer ausreichenden Menge vorhanden sind, um die Zugfestigkeit und/oder die Dehnung des Polyurethanpolymers gegenüber einem gleichartigen Polyurethanpolymer zu verbessern, das in Abwesenheit der langgestreckten Teilchen hergestellt wird und
(b) worin die Menge an starrem Polymer entweder 6 bis 20 Gew.-% (auf Basis des Polyurethangewichts) ist, wenn das starre Polymer ein Molekulargewicht von weniger als 3000 aufweist, oder 1 bis weniger als 10 Gew.-% (auf Basis des Polyurethangewichts) ist, wenn das starre Polymer ein Molekulargewicht von mehr als 3000 aufweist.

6. Zusammensetzung nach Anspruch 5, worin das starre Polymer ein Aspektverhältnis von mindestens 6,4 aufweist.

7. Verfahren zur Herstellung eines Polyurethanpolymers, in dem langgestreckte Teilchen eines hochschmelzenden, starren Polymers mit einem Schmelzpunkt von über 100°C dispergiert sind, durch Reaktion eines Polyisocyanats und einer aktiven Wasserstoff enthaltenden Zusammensetzung, die mindestens eine Verbindung mit Hydroxylgruppen enthält,
**gekennzeichnet durch**
(a) Dispergieren von langgestreckten Teilchen eines hochschmelzenden, starren Polymers, das eine mittlere Länge von weniger als 10 Mikrometer und ein Aspektverhältnis von größer als 4 aufweist, aus einem aromatischen Diamin und einem aromatischen Diisocyanat in der aktiven Wasserstoff enthaltenden Zusammensetzung in einer ausreichenden Menge, um die Zugfestigkeit und/oder die Dehnung des Polyurethanpolymers gegenüber einem gleichartigen Polyurethanpolymer zu verbessern, das in Abwesenheit der langgestreckten Teilchen hergestellt wird, und
(b) worin die Menge an starrem Polymer entweder 6 bis 20 Gew.-% (auf Basis des Polyurethangewichts) ist, wenn das starre Polymer ein Molekulargewicht von weniger als 3000 aufweist, oder 1 bis weniger als 10 Gew.-% (auf Basis des Polyurethangewichts) ist, wenn das starre Polymer ein Molekulargewicht von mehr als 3000 aufweist.

## Patentansprüche (Patentansprüche für folgende(n) Vertragsstaat(en): AT, ES)

1. Verfahren zur Herstellung eines Polyurethanpolymers, in dem langgestreckte Teilchen eines hochschmelzenden, starren Polymers mit einem Schmelzpunkt von über 100°C dispergiert sind, durch Reaktion eines Polyisocyanats und einer aktiven Wasserstoff enthaltenden Zusammensetzung, die mindestens eine Verbindung mit Hydroxylgruppen enthält,
**gekennzeichnet durch**
(a) Dispergieren von langgestreckten Teilchen eines hochschmelzenden, starren Polymers, das eine mittlere Länge von weniger als 10 Mikrometer und ein Aspektverhältnis von größer als 4 aufweist, aus einem aromatischen Diamin und einem aromatischen Diisocyanat in der aktiven Wasserstoff enthaltenden Zusammensetzung, in einer ausreichenden Menge um die Zugfestigkeit und/oder die Dehnung des Polyurethanpolymers gegenüber einem gleichartigen Polyurethanpolymer zu verbessern, das in Abwesenheit der langgestreckten Teilchen hergestellt wird, und
(b) worin die Menge an starrem Polymer entweder 6 bis 20 Gew.-% (auf Basis des Polyurethangewichts) ist, wenn das starre Polymer ein Molekulargewicht von weniger als 3000 aufweist, oder 1 bis weniger als 10 Gew.-% (auf Basis des Polyurethangewichts) ist, wenn das starre Polymer ein Molekulargewicht von mehr als 3000 aufweist.

2. Verfahren nach Anspruch 1, worin ein starres Polymer hergestellt wird, das ein Aspektverhältnis von mindestens 6,4 aufweist.

3. Verfahren nach Anspruch 1 oder 2, worin das aromatische Diamin Methylendianilin umfaßt und das aromatische Diisocyanat Diphenylmethandiisocyanat umfaßt.

4. Verfahren nach einem der vorhergehenden Ansprüche, worin ein Polyurethanpolymer hergestellt wird, das nicht-zellig, mikrozellig oder zellig ist.

## Revendications (Revendications pour l'(les) Etat(s) contractant(s) suivant(s): BE, CH, DE, FR, GB, IT, LI, NL, SE)

1. Polymère de polyuréthane qui est le produit de la réaction d'un polyisocyanate et d'une composition contenant de l'hydrogène actif, qui contient au moins un composé ayant des groupes hydroxyle, et dans laquelle sont dispersées des particules allongées d'un polymère rigide à point de fusion élevé,ayant un point de fusion supérieur à 100°C, caractérisé en ce que :
(a) ledit polymère rigide à point de fusion élevé comprend un polymère d'une diamine aromatique et d'un diisocyanate aromatique, et les particules allongées, ayant une longueur moyenne de moins de 10 microns et un rapport dimensionnel supérieur à 4, sont présentes en une quantité suffisante pour augmenter la résistance à la traction et/ou l'allongement du polymère de polyuréthane par rapport à un polymère de polyuréthane semblable préparé en l'absence desdites particules allongées, et
(b) dans lequel ladite quantité de polymère rigide est soit de 6 à 20 pour-cent en poids (par rapport au poids du polyuréthane) lorsque le polymère rigide possède une masse moléculaire inférieure à 3000, soit de 1 à moins de 10 pour-cent en poids (par rapport au poids du polyuréthane) lorsque le polymère rigide possède une masse moléculaire supérieure à 3000.

2. Polymère de polyuréthane selon la revendication 1, dans lequel ledit polymère rigide possède un rapport dimensionnel valant au moins 6,4.

3. Polymère de polyuréthane selon la revendication 1 ou 2, dans lequel ladite diamine aromatique comprend la méthylène-dianiline et ledit diisocyanate aromatique comprend le diphénylméthane-diisocyanate.

4. Polymère de polyuréthane selon l'une quelconque des revendications précédentes, qui est non cellulaire, microcellulaire ou cellulaire.

5. Composition contenant de l'hydrogène actif, comprenant au moins un composé contenant de l'hydrogène actif qui contient au moins un composé ayant des groupes hydroxyle, et dans laquelle sont dispersées des particules allongées d'un polymère rigide à point de fusion élevé, ayant un point de fusion au-dessus de 100°C, présent en une quantité qui fournit un renforcement à un polymère de polyuréthane préparé par réaction d'un polyisocyanate et de la composition contenant de l'hydrogène actif, caractérisée en ce que :
(a) ledit polymère rigide à point de fusion élevé comprend un polymère d'une diamine aromatique et d'un diisocyanate aromatique, et les particules allongées, ayant une longueur moyenne inférieure à 10 microns et un rapport dimensionnel supérieur à 4, sont présentes en une quantité suffisante pour augmenter la résistance à la traction et/ou l'allongement du polymère de polyuréthane par rapport à un polymère de polyuréthane semblable préparé en l'absence desdites particules allongées, et
(b) dans laquelle ladite quantité de polymère rigide est soit de 6 à 20 pour-cent en poids (par rapport au poids du polyuréthane) lorsque le polymère rigide possède une masse moléculaire inférieure à 3000, soit de 1 à moins de 10 pour-cent en poids (par rapport au poids du polyuréthane) lorsque le polymère rigide possède une masse moléculaire supérieure à 3000.

6. Composition selon la revendication 5, dans laquelle ledit polymère rigide possède un rapport dimensionnel d'au moins 6,4.

7. Procédé pour la préparation d'un polymère de polyuréthane dans lequel sont dispersées des particules allongées d'un polymère rigide de point de fusion élevé, ayant un point de fusion supérieur à 100°C, qui comprend la réaction d'un polyisocyanate et d'une composition contenant de l'hydrogène actif, qui contient au moins un composé ayant des groupes hydroxyle, caractérisé par
(a) la dispersion, dans la composition contenant de l'hydrogène actif, de particules allongées, ayant une longueur moyenne inférieure à 10 microns et un rapport dimensionnel supérieur à 4, d'un polymère rigide, à point de fusion élevé, d'une diamine aromatique et d'un diisocyanate aromatique, en une quantité suffisante pour augmenter la résistance à la traction et/ou l'allongement du polymère de polyuréthane par rapport à un polymère de polyuréthane semblable préparé en l'absence desdites particules allongées, et
(b) dans lequel ladite quantité de polymère rigide est soit de 6 à 20 pour-cent en poids ( par rapport au poids du polyuréthane) lorsque le polymère rigide possède une masse moléculaire inférieure à 3000, soit de 1 à moins de 10 % en poids (par rapport au poids du polyuréthane) lorsque le polymère rigide possède une masse moléculaire supérieure à 3000.

## Revendications (Revendications pour l'(les) Etat(s) contractant(s) suivant(s): AT, ES)

1. Procédé pour la préparation d'un polymère de polyuréthane dans lequel sont dispersées des particules allongées d'un polymère rigide de point de fusion élevé, ayant un point de fusion supérieur à 100°C, qui comprend la réaction d'un polyisocyanate et d'une composition contenant de l'hydrogène actif, qui contient au moins un composé ayant des groupes hydroxyle caractérisé par :
(a) la dispersion, dans la composition contenant de l'hydrogène actif, de particules allongées , ayant une longueur moyenne inférieure à 10 microns et un rapport dimensionnel supérieur à 4, d'un polymère rigide, à point de fusion élevé, d'une diamine aromatique et d'un diisocyanate aromatique , en une quantité suffisante pour augmenter la résistance à la traction et/ou l'allongement du polymère de polyuréthane par rapport à un polymère de polyuréthane semblable préparé en l'absence desdites particules allongées, et
(b) dans lequel ladite quantité de polymère rigide est soit de 6 à 20 pour-cent en poids, par rapport au poids du polyuréthane) lorsque le polymère rigide possède une masse moléculaire inférieure à 3000, soit de 1 à moins de 10 % en poids (par rapport au poids du polyuréthane) lorsque le polymère rigide possède une masse moléculaire supérieure à 3000.

2. Procédé selon la revendication 1, dans lequel on prépare un polymère rigide qui possède un rapport dimensionnel valant au moins 6,4.

3. Procédé selon la revendication 1 ou 2, dans lequel ladite diamine aromatique comprend la méthylène-dianiline et ledit diisocyanate aromatique comprend le diphénylméthane-diisocyanate.

4. Procédé selon l'une quelconque des revendications précédentes, dans lequel on prépare un polymère de polyuréthane qui est non cellulaire, microcellulaire ou cellulaire.
